# EUROPÄISCHE PATENTSCHRIFT

(11) **EP 2 586 282 B1**
(45) Veröffentlichungstag und Bekanntmachung des Hinweises auf die Patenterteilung: **01.03.2017**
(21) Anmeldenummer: 12184553.1
(22) Anmeldetag: 14.09.2012
(51) Int. Cl.: A01B 69/00

(54) **Anordnung zur selbsttätigen Lenkung einer Kombination aus einem selbstfahrenden Fahrzeug und einem Gerät zur Feldbearbeitung**
Assembly for the automatic steering a combination of a self-propelled vehicle and an apparatus for cultivating fields
Agencement pour direction automatique d'une combinaison à partir d'un véhicule automobile et un appareil destiné aux travaux des champs

(30) Priorität: 26.10.2011 DE 102011085244
(43) Veröffentlichungstag der Anmeldung: 01.05.2013
(73) Patentinhaber: Deere & Company, Moline, IL 61265 (US)
(72) Erfinder: Merx, Stephan, 55288 Partenheim (DE); Germann, Nicolas, 67714 Waldfischbach (DE)
(74) Vertreter: Holst, Sönke

(56) Entgegenhaltungen:
- EP-A2- 1 266 553
- WO-A1-2012/041743
- US-A1- 2003 208 311
- US-A1- 2011 112 721

## Beschreibung

Die Erfindung betrifft eine Anordnung zur selbsttätigen Lenkung einer Kombination aus einem selbstfahrenden Fahrzeug und einem mit dem Fahrzeug verbundenen Gerät zur Bearbeitung eines Felds, wobei das selbstfahrende Fahrzeug mit einer Lenksteuerung zur selbsttätigen Lenkung des Fahrzeugs entlang eines ersten Sollwegs ausgestattet ist und das Gerät gegenüber dem Fahrzeug durch einen mit einer Gerätepositionssteuerung gekoppelten Aktor in seitlicher Richtung verstellbar und entlang eines zweiten Sollwegs führbar ist und ein entsprechendes Verfahren.

### Stand der Technik

In der Landwirtschaft liegen vielfach Anwendungsfälle vor, in denen Geräte mittels eines selbstfahrenden Fahrzeugs über ein Feld bewegt werden und es beabsichtigt ist, die Geräte einen gewünschten Sollweg zurücklegen zu lassen, um beispielsweise Erntegut von einem Feld aufzunehmen, den Boden zu bearbeiten oder Materialien, wie Saatgut oder Dünger, auf ein Feld auszubringen. In der Vergangenheit wurde dazu das Fahrzeug durch einen Fahrer gelenkt und das starr an einer Dreipunktanbauvorrichtung oder mittels einer Deichsel an einer Kupplung des Zugfahrzeugs angehängte Gerät folgte dem manuell oder selbsttätig gelenkten Fahrzeug, wobei der Sollweg des Geräts aufgrund unterschiedlicher Bewegungsbahnen des Fahrzeugs und des Geräts nicht immer exakt eingehalten werden konnte.

Es wurden weiterhin automatische Anordnungen vorgeschlagen (US 6 865 465 B2, US 2011/0112721 A1), bei welchen das Fahrzeug mit einem satellitenbasierten Positionsbestimmungssystem ausgestattet und basierend auf den Signalen des Positionsbestimmungssystems selbsttätig auf einem Sollweg geführt wird, während das Gerät durch einen Aktor gegenüber dem Fahrzeug in seitlicher Richtung verschiebbar und ebenfalls mit einem satellitenbasierten Positionsbestimmungssystem versehen ist und der Aktor basierend auf den Signalen des Positionsbestimmungssystems des Geräts derart angesteuert wird, dass das Gerät ebenfalls auf dem Sollweg bewegt wird. Die US 7 162 348 B2 beschreibt eine ähnliche Anordnung, bei welcher das Fahrzeug durch sein Positionsbestimmungssystem gelenkt wird und die Position des Geräts gegenüber dem Fahrzeug durch ein Positionsbestimmungssystem des Geräts und einen zugehörigen Aktor feineingestellt wird.

### Aufgabe der Erfindung

Im Stand der Technik wird das Fahrzeug durch sein Positionsbestimmungssystem auf seinem Sollweg gehalten und das Gerät durch seinen Aktor gegenüber dem Fahrzeug in seitlicher Richtung bewegt, um eventuelle Abweichungen vom Sollweg auszugleichen. Der Verstellweg des Geräts ist jedoch durch mechanische Eigenschaften des Aktors begrenzt. Es treten deshalb in manchen Fällen (beispielsweise bei Arbeiten am Seitenhang, die dazu führen, dass das Fahrzeug aufgrund des Schlupfes hangaufwärts gelenkt wird) Situationen auf, in denen der Verstellweg des Geräts nicht mehr ausreicht, um es auf dem Sollweg zu halten. Die vorliegende Erfindung hat sich zum Ziel gesetzt, derartige Situationen zu vermeiden oder zumindest ihre Häufigkeit zu vermindern.

### Lösung

Diese Aufgabe wird erfindungsgemäß durch die Lehre der Patentansprüche 1, 7 und 8 gelöst, wobei in den weiteren Patentansprüchen Merkmale aufgeführt sind, die die Lösung in vorteilhafter Weise weiterentwickeln.

Eine Anordnung zur selbsttätigen Lenkung einer Kombination aus einem selbstfahrenden Fahrzeug und einem mit dem Fahrzeug verbundenen Gerät zur Bearbeitung eines Felds umfasst eine Lenksteuerung zur selbsttätigen Lenkung des Fahrzeugs entlang eines ersten Sollwegs und eine Gerätepositionssteuerung mit einem Aktor. Das Gerät kann beispielsweise dazu dienen, Erntegut von einem Feld aufzunehmen, den Boden zu bearbeiten oder Materialien, wie Saatgut oder Dünger, auf ein Feld auszubringen. Das Gerät ist gegenüber dem Fahrzeug durch den mit einer Gerätepositionssteuerung gekoppelten Aktor in seitlicher Richtung verstellbar und durch die Gerätepositionssteuerung entlang eines zweiten Sollwegs führbar. Es wird vorgeschlagen, dass die Lenksteuerung im Betrieb das Fahrzeug in Abhängigkeit von der jeweiligen Stellung des Aktors lenkt. Die Lenksteuerung lenkt somit das Fahrzeug nach rechts, sobald der Aktor das Gerät um mehr als einen vorbestimmten Anteil seines Bewegungsbereichs nach rechts bewegt hat. Analog lenkt sie das Fahrzeug nach links, sobald der Aktor das Gerät um mehr als einen vorbestimmten Anteil seines Bewegungsbereichs nach links bewegt hat.

Die Stellung des Aktors und somit des Geräts gegenüber dem Fahrzeug wird demnach bei der Erzeugung der Lenksignale zur selbsttätigen Lenkung des Fahrzeugs mit berücksichtigt. Auf diese Weise lässt sich vermeiden, dass der Aktor an seine Endstellung gerät und das Gerät von seinem (zweiten) Sollweg abweicht.

Der vorbestimmte Anteil kann beispielsweise der gesamte Bewegungsbereich oder ein Teil davon sein, z. B. 90 %. Das würde bedeuten, dass das Fahrzeug gegenlenkt, sobald die letzten 10 % des Bewegungsbereichs des Aktors nach links oder rechts erreicht sind. Da das Fahrzeug üblicherweise wesentlich träger als der Aktor reagiert, können die verbleibenden 10 % des Bewegungsbereichs des Aktors dann noch als Reserve verwendet werden, um während des Nachführens des Fahrzeugs dennoch kurzfristige Abweichungen des Geräts von seinem Sollweg ausgleichen zu können. Üblicherweise wird der erste Sollweg mit dem zweiten Sollweg zusammenfallen. Es sind aber auch Betriebsarten denkbar, in denen sie voneinander abweichen, beispielsweise beim Wenden am Feldende (vgl. DE 10 2010 041 885 A1), oder wenn das Gerät gegenüber dem Fahrzeug seitlich versetzt über das Feld bewegt werden soll.

Da Situationen denkbar sind, in denen Abweichungen des Fahrzeugs von seinem ersten Sollweg unerwünscht sind, beispielsweise um zu verhindern, dass es bereits bearbeitete Teile des Felds überfährt, kann die hier vorgeschlagene Kopplung der Lenkung des Fahrzeugs an die Stellung des Aktors abschaltbar sein. Vorzugsweise kann daher ein zweiter Modus der Lenksteuerung ausgewählt werden, in dem die Lenksteuerung das Fahrzeug unabhängig von der Stellung des Aktors auf dem ersten Weg bewegt und den Aktor derart ansteuert, dass er das Gerät (innerhalb seines Bewegungsbereichs) auf dem zweiten Sollweg führt.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf ein Fahrzeug mit einem daran angekoppelten Gerät, und
- Fig. 2: ein Flussdiagramm, nach dem die Lenksteuerung des Fahrzeugs und des Geräts arbeitet.

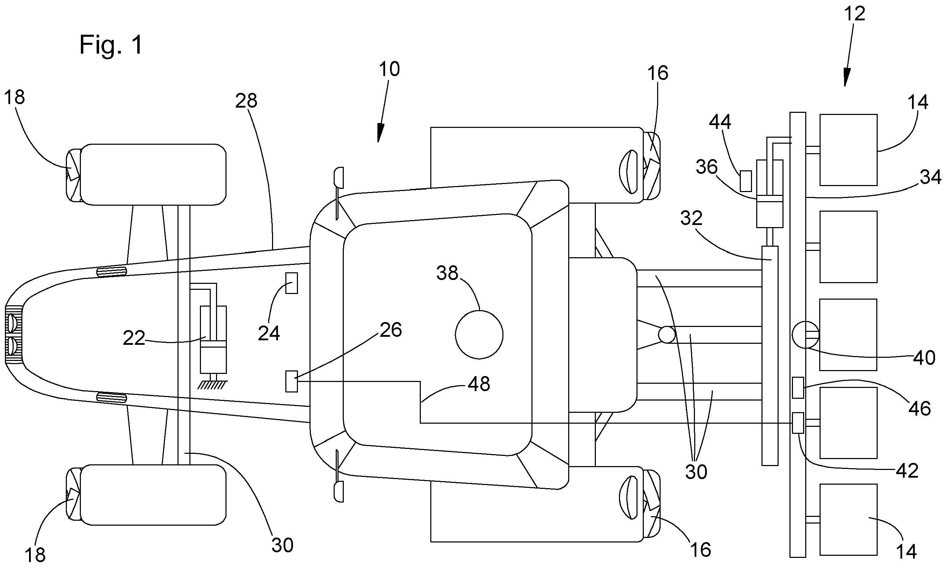

Die Figur 1 zeigt eine Draufsicht auf eine Kombination aus einem Fahrzeug 10 und einem Gerät 12. Das Fahrzeug 10 ist selbstfahrend und hier als landwirtschaftlicher Traktor ausgeführt. Das Gerät 12 ist im dargestellten Beispiel eine Sämaschine mit einer Anzahl über die Breite des

Geräts 12 verteilter Reiheneinheiten 14 zum Einbringen von Saatgut in den Boden, obwohl auch beliebige andere landwirtschaftliche Geräte verwendet werden können. Das Fahrzeug 10 umfasst ein Fahrgestell 28 mit hinteren, antreibbaren Rädern 16 und vorderen Rädern 18, die mittels einer Spurstange 20 und eines mit dieser gekoppelten Lenkaktors 22 lenkbar sind. Der als Hydraulikzylinder ausgeführte Lenkaktor 22 wird über eine Ventileinheit 24 und eine Lenksteuerung 26 kontrolliert. Sollte das Fahrzeug 10, anders als dargestellt, mit Gummiraupenlaufwerken versehen und über deren Geschwindigkeitsunterschied gelenkt werden, wäre der Lenkaktor 22 ein Bestandteil der Geschwindigkeitssteuerung der Gummiraupenlaufwerke sein.

An einer am Fahrgestell 28 befestigten Dreipunktanbauvorrichtung 30 mit Ober- und Unterlenkern ist eine Gerätehalterung 32 montiert, an der ein Querträger 34 mittels eines Aktors 36 in seitlicher Richtung, d.h. quer zur Vorwärtsrichtung des Fahrzeugs 10, die in der Figur 1 von rechts nach links verläuft, verschiebbar angebracht ist. Der Querträger 34 haltert die Reiheneinheiten 14 des Geräts 12.

Details einer möglichen Ausführungsform der Gerätehalterung 32 und des Querträgers 34 sind in der DE 10 2009 028 409 A1 offenbart. Das Gerät 12 könnte auch auf eine beliebige andere Art am Fahrzeug 12 befestigt sein, beispielsweise über eine mittels des Aktors 36 lenkbare Deichsel oder mittels des Aktors 36 lenkbare, im Bodeneingriff befindliche Schare oder fernkraftbetätigte Ober- und Unterlenker der Dreipunktanbauvorrichtung 30. Das Gerät 12 könnte auch an der Vorderseite des Fahrzeugs 10 angeordnet sein und optional weitere Geräte 12 rückwärtig beidseits des Fahrzeugs 10.

Der Aktor 36 ist durch eine Gerätepositionssteuerung 42 über eine am Gerät 12 angebrachte Ventileinheit 46 kontrollierbar, wobei die Ventileinheit 46 vom Hydrauliksystem des Fahrzeugs 10 beaufschlagt wird und die Gerätepositionssteuerung 42 über einen Sensor 44 die aktuelle Stellung des Aktors 36 erfasst. Die Lenksteuerung 26 und die Gerätepositionssteuerung 42 sind untereinander über einen Bus 48 datenübertragend verbunden.

Die Lenksteuerung 26 erhält Positionssignale hinsichtlich der Position des Fahrzeugs 10 von einem Positionsbestimmungssystem 38 des Fahrzeugs 10, das auf dem Dach von dessen Kabine angebracht ist. Die Gerätepositionssteuerung 42 erhält Positionssignale hinsichtlich der Position des Geräts 12 von einem sich mit dem Querträger 34 in seitlicher Richtung bewegenden, dort mittig angebrachten Positionsbestimmungssystem 40 des Geräts 12. Beide Positionsbestimmungssysteme 38, 40 umfassen vorzugsweise Empfänger für Positionssignale von Satelliten, wie dem GPS, Galileo- oder Glonass-System und Empfänger für Differenzsignale zur Erhöhung der Genauigkeit. Das Positionsbestimmungssystem 38 könnte alternativ oder zusätzlich mit einer Kamera oder einem anderen Iokalen Sensor ausgestattet sein, der Signale zur Lenkung des Fahrzeugs 10 bereitstellt. Analog könnte das Positionsbestimmungssystem 40 durch Iokale Sensoren ergänzt oder ersetzt werden, die beispielsweise die seitliche Position des Geräts 12 gegenüber dem Fahrzeug 10 erfassen, oder die Position des Geräts 12 wird durch das Positionsbestimmungssystem 40 mittels mathematischer Formeln aus dem vom Fahrzeug 10 zurückgelegten Weg abgeleitet (vgl. WO 2008/005195 A2). Es sei noch angemerkt, dass die Lenksteuerung 26 und die Gerätepositionssteuerung 42 innerhalb einer einzigen Einheit zusammengefasst werden könnten; das gilt auch für die Ventileinheiten 24 und 46.

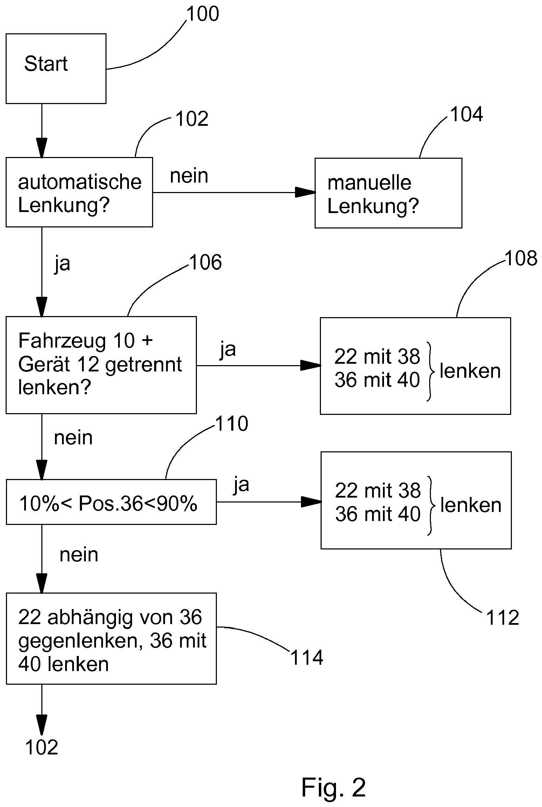

Die Figur 2 zeigt ein Flussdiagramm, nach dem die Lenksteuerung 26 und die Gerätepositionssteuerung 42 arbeiten.

Nach dem Start im Schritt 100 mit dem Hochfahren und Initialisieren der Lenksteuerung 26 und der Gerätepositionssteuerung 42 folgt der Schritt 102, in dem abgefragt wird, ob eine automatische Lenkung erfolgen soll. Dazu kann ein Bediener in der Kabine des Fahrzeugs 10 einen entsprechenden Schalter betätigen. Die automatische Lenkung wird weiterhin selbsttätig abgeschaltet, wenn der Bediener ein Lenkrad betätigt. Ergibt der Schritt 102, dass keine automatische Lenkung erfolgen soll, folgt der Schritt 104, in dem das Fahrzeug 10 manuell mittels eines Lenkrads oder dgl. gelenkt wird, das elektrisch über die Lenksteuerung 26 und/oder hydraulisch über die Ventileinheit 24 mit dem Lenkaktor 22 zusammenwirkt.

Ergibt sich im Schritt 102 hingegen, dass eine automatische Lenkung erfolgen soll, folgt der Schritt 106, in dem abgefragt wird, ob das Fahrzeug 10 und das Gerät 12 getrennt voneinander gelenkt werden sollen. Der Bediener des Fahrzeugs 10 kann somit (z.B. über einen Schalter oder ein geeignetes Menü in einem Bordcomputersystem) auswählen, ob ein erster Modus (Schritte 110 bis 114), in dem die Lenkung des Fahrzeugs 10 und des Geräts 12 miteinander gekoppelt sind, oder ein zweiter Modus ablaufen soll (Schritt 108), in dem sie nicht gekoppelt sind. Der erste Modus ermöglicht auch in problematischen Situationen, wie beim Befahren eines Seitenhangs oder beim Bearbeiten unebener Felder, dass das Gerät 12 auf seinem Sollweg verbleibt, während der zweite Modus sicherstellt, dass das Fahrzeug 10 auf seinem Sollweg bleibt und somit beispielsweise verhindert, dass bereits überfahrene Bereiche des Felds ein zweites Mal überfahren werden.

Ist im Schritt 106 der zweite Modus ausgewählt, folgt der Schritt 108, in dem die Lenksteuerung 26 anhand der Signale des Positionsbestimmungssystems 38 und einer der Lenksteuerung 26 vorliegenden Sollweginformation für den vom Fahrzeug zurückzulegenden (ersten) Sollweg den Lenkaktor 22 über die Ventileinheit 24 ansteuert. Diese erste Sollweginformation kann beispielsweise eine gekrümmte oder gerade Linie sein, entlang der das Fahrzeug 10 über das Feld gesteuert wird. Gleichzeitig (oder kurz davor oder danach) steuert die Gerätepositionssteuerung 42 anhand der Signale des Positionsbestimmungssystems 40 und einer der Gerätepositionssteuerung 42 vorliegenden Sollweginformation für den vom Gerät 12 zurückzulegenden (zweiten) Sollweg den Aktor 36 über die Ventileinheit 46 an. Diese zweite Sollweginformation kann beispielsweise eine gekrümmte oder gerade Linie sein, entlang der das Gerät 12 über das Feld gesteuert wird und ist in der Regel mit der ersten Sollweginformation identisch, obwohl sie beispielsweise beim Wendevorgang im Vorgewende auch davon abweichen kann. Im Schritt 108 werden der Lenkaktor 22 nur basierend auf der ersten Sollweginformation und den Positionssignalen des Positionsbestimmungssystems 38 und der Aktor 36 nur basierend auf der zweiten Sollweginformation und den Positionssignalen des Positionsbestimmungssystems 40 angesteuert. Dies entspricht der Vorgehensweise nach US 6 865 465 B2 und US 2011/0112721 A1.

Falls der Schritt 106 eine Auswahl des ersten Modus ergibt, folgt der Schritt 110, in dem die Gerätepositionssteuerung 42 anhand der Signale des Sensors 44 prüft, ob sich der Aktor 36 innerhalb eines vorbestimmten Anteils seines Bewegungsbereichs befindet, der in dieser Ausführungsform den mittleren 80 % des seitlichen Verstellbereichs des Aktors 36 entspricht. Befindet sich der Aktor 36 innerhalb dieses vorbestimmten Anteils, steht noch genug Spielraum zur seitlichen Verstellung des Geräts 12 in beide seitliche Richtungen zur Verfügung und es folgt der Schritt 112, der mit dem oben beschriebenen Schritt 108 übereinstimmt. Auch hier werden somit das Fahrzeug 10 und das Gerät 12 unabhängig voneinander seitlich gelenkt bzw. verstellt.

Falls der Schritt 110 jedoch ergibt, dass sich der Aktor 36 innerhalb einer der äußeren Grenzen (hier jeweils 10 %) seines Bewegungsbereichs befindet, folgt der Schritt 114. In diesem Schritt erhält die Lenksteuerung 26 von der Gerätepositionssteuerung 42 über den Bus 48 die Anweisung zum Gegenlenken. Das bedeutet, dass die Lenksteuerung 26 angewiesen wird, das Fahrzeug 10 nach links zu lenken, wenn sich der Aktor 36 innerhalb der links liegenden 10 % seines Bewegungsbereichs befindet, d.h. das Gerät 12 sich in der Figur 1 seiner unteren Endstellung genähert hat. Analog wird die Lenksteuerung 26 angewiesen, das Fahrzeug 10 nach rechts zu lenken, wenn sich der Aktor 36 innerhalb der rechts liegenden 10 % seines Bewegungsbereichs befindet, d.h. das Gerät 12 sich in der Figur 1 seiner oberen Endstellung genähert hat. Die Gerätepositionssteuerung 42 übersteuert im Schritt 114 somit in der Lenksteuerung 26 die Signale der Positionsbestimmungseinrichtung 38 und die erste Sollweginformation. Dadurch erreicht man, dass der Aktor 36 niemals (oder zumindest nur noch in wesentlich weniger Fällen als bisher) eine seiner Endstellungen erreicht, ab welcher er das Gerät 12 nicht mehr auf dem zweiten Sollweg führen kann. Im Schritt 114 wird weiterhin der Aktor 36 in Abhängigkeit von der zweiten Sollweginformation und den Signalen des Positionsbestimmungssystems 40 angesteuert, wobei die zu erwartende Reaktion des Fahrzeugs 10 auf die Anweisung der Gerätepositionssteuerung 42 an die Lenksteuerung 26 schon berücksichtigt werden kann. Auf den Schritt 114 folgt wieder der Schritt 102.

### Bezugszeichenliste

- 10: Fahrzeug
- 12: Gerät
- 14: Reiheneinheiten
- 16: hintere Räder
- 18: vordere Räder
- 20: Spurstange
- 22: Lenkaktor
- 24: Ventileinheit
- 26: Lenksteuerung
- 28: Fahrgestell
- 30: Dreipunktanbauvorrichtung
- 32: Gerätehalterung
- 34: Querträger
- 36: Aktor
- 38: Positionsbestimmungssystem
- 40: Positionsbestimmungssystem
- 42: Gerätepositionssteuerung
- 44: Sensor
- 46: Ventileinheit
- 48: Bus

Verzeichnis der Schritte der Figur 2
- 100: Start
- 102: autom. Lenkung?
- 104: man. Lenkung
- 106: Fahrzeug 10 und Gerät 12 getrennt lenken?
- 108: 22 mit 38, 36 mit 40 lenken
- 110: 10% < Pos. 36 < 90%?
- 112: 22 mit 38, 36 mit 40 lenken
- 114: 22 abh. von 36 gegenlenken, 36 mit 40 lenken

## Patentansprüche

1. Anordnung zur selbsttätigen Lenkung einer Kombination aus einem selbstfahrenden Fahrzeug (10) und einem mit dem Fahrzeug (10) verbundenen Gerät (12) zur Bearbeitung eines Felds, wobei das selbstfahrende Fahrzeug (10) mit einer Lenksteuerung (26) zur selbsttätigen Lenkung des Fahrzeugs (10) entlang eines ersten Sollwegs ausgestattet ist und das Gerät (12) gegenüber dem Fahrzeug (10) durch einen mit einer Gerätepositionssteuerung (42) gekoppelten Aktor (36) in seitlicher Richtung verstellbar und entlang eines zweiten Sollwegs führbar ist, **dadurch gekennzeichnet, dass** die Lenksteuerung (26) eingerichtet ist, das Fahrzeug (10) in Abhängigkeit von der jeweiligen Stellung des Aktors (36) zu lenken und das Fahrzeug (10) nach rechts zu lenken, sobald der Aktor (36) das Gerät (12) um mehr als einen vorbestimmten Anteil seines Bewegungsbereichs nach rechts bewegt hat und das Fahrzeug (10) nach links zu lenken, sobald der Aktor (36) das Gerät (12) um mehr als einen vorbestimmten Anteil seines Bewegungsbereichs nach links bewegt hat.

2. Anordnung nach Anspruch 1, wobei der erste Sollweg gleich oder ungleich dem zweiten Sollweg ist.

3. Anordnung nach einem der Ansprüche 1 oder 2, wobei die Lenksteuerung (26) in einen zweiten Modus verbringbar ist, in dem sie das Fahrzeug (10) unabhängig von der Stellung des Aktors (36) lenkt.

4. Anordnung nach einem der Ansprüche 1 bis 3, wobei die Lenksteuerung (26) betreibbar ist, einen Lenkaktor (22) des Fahrzeugs (10) anhand der Signale eines Positionsbestimmungssystems (38) zur Ermittlung der Position des Fahrzeugs (10) und einer Sollweginformation für den vom Fahrzeug zurückzulegenden, ersten Sollweg anzusteuern.

5. Anordnung nach einem der Ansprüche 1 bis 4, wobei die Gerätepositionssteuerung (42) betreibbar ist, den Aktor (36) anhand der Signale eines Positionsbestimmungssystems (40) zur Ermittlung der Position des Geräts (12) und einer Sollweginformation für den vom Gerät (12) zurückzulegenden, zweiten Sollweg anzusteuern.

6. Anordnung nach Anspruch 4 oder 5, wobei die Gerätepositionssteuerung (42) betreibbar ist, in dem Fall, dass der Aktor (36) den vorbestimmten Anteil seines Bewegungsbereichs überschritten hat, in der Lenksteuerung (26) die Signale der Positionsbestimmungseinrichtung (38) und die erste Sollweginformation zu übersteuern.

7. Kombination aus einem selbstfahrenden Fahrzeug (10) und einem mit dem Fahrzeug (10) verbundenen Gerät (12) zur Bearbeitung eines Felds mit einer Anordnung nach einem der Ansprüche 1 bis 6.

8. Verfahren zur selbsttätigen Lenkung einer Kombination aus einem selbstfahrenden Fahrzeug (10) und einem mit dem Fahrzeug (10) verbundenen Gerät (12) zur Bearbeitung eines Felds, wobei das selbstfahrende Fahrzeug (10) durch eine Lenksteuerung (26) selbsttätig entlang eines ersten Sollwegs gelenkt wird und das Gerät (12) gegenüber dem Fahrzeug (10) durch eine Gerätepositionssteuerung (42) mittels eines Aktors (36) in seitlicher Richtung entlang eines zweiten Sollwegs geführt wird, **dadurch gekennzeichnet, dass** die Lenksteuerung (26) das Fahrzeug (10) in Abhängigkeit von der jeweiligen Stellung des Aktors (36) lenkt und das Fahrzeug (10) nach rechts lenkt, sobald der Aktor (36) das Gerät (12) um mehr als einen vorbestimmten Anteil seines Bewegungsbereichs nach rechts bewegt hat und das Fahrzeug (10) nach links lenkt, sobald der Aktor (36) das Gerät (12) um mehr als einen vorbestimmten Anteil seines Bewegungsbereichs nach links bewegt hat.

## Claims

1. Arrangement for automatically steering a combination of a self-propelled vehicle (10) and an implement (12) for cultivating a field which is connected to the vehicle (10) , the self-propelled vehicle (10) being equipped with a steering control unit (26) for automatically steering the vehicle (10) along a first reference path and the implement (12) being displaceable in a lateral direction with respect to the vehicle (10) by an actuator (36) coupled to an implement position control unit (42) and being guidable along a second reference path, **characterized in that** the steering control unit (26) is set up to steer the vehicle (10) in dependence on the position of the actuator (36) at the time and to steer the vehicle (10) to the right as soon as the actuator (36) has moved the implement (12) to the right by more than a predetermined portion of its range of movement and to steer the vehicle (10) to the left as soon as the actuator (36) has moved the implement (12) to the left by more than a predetermined portion of its range of movement.

2. Arrangement according to Claim 1, wherein the first reference path is identical or non-identical to the second reference path.

3. Arrangement according to either of Claims 1 and 2, wherein the steering control unit (26) can be transferred to a second mode in which it steers the vehicle (10) independently of the position of the actuator (36).

4. Arrangement according to any one of Claims 1 to 3, wherein the steering control unit (26) can be operated to activate a steering actuator (22) of the vehicle (10) with reference to the signals of a position determining system (38) for capturing the position of the vehicle (10) and to reference path information regarding the first reference path to be followed by the vehicle.

5. Arrangement according to any one of Claims 1 to 4, wherein the implement position control unit (42) can be operated to activate the actuator (36) with reference to the signals of a position determining system (40) for capturing the position of the implement (12) and to reference path information regarding the second reference path to be followed by the implement (12).

6. Arrangement according to Claim 4 or 5, wherein the implement position control unit (42) can be operated to override in the steering control unit (26) the signals of the position determining arrangement (38) and the first reference path information in the event that the actuator (36) has exceeded the predetermined portion of its range of movement.

7. Combination of a self-propelled vehicle (10) and an implement (12) for cultivating afield which is connected to the vehicle (10), having an arrangement according to any one of Claims 1 to 6.

8. Method for automatically steering a combination of a self-propelled vehicle (10) and an implement (12) for cultivating a field which is connected to the vehicle (10) , the self-propelled vehicle (10) being steered automatically along a first reference path by a steering control unit (26) and the implement (12) being guided in a lateral direction with respect to the vehicle (10) along a second reference path by an implement position control unit (42) by means of an actuator (36), **characterized in that** the steering control unit (26) steers the vehicle (10) in dependence on the position of the actuator (36) at the time and steers the vehicle (10) to the right as soon as the actuator (36) has moved the implement (12) to the right by more than a predetermined portion of its range of movement and steers the vehicle (10) to the left as soon as the actuator (36) has moved the implement (12) to the left by more than a predetermined portion of its range of movement.

## Revendications

1. Agencement pour la direction automatique d'une combinaison d'un véhicule automobile (10) avec un appareil (12) attelé au véhicule (10) et destiné aux travaux des champs, dans lequel le véhicule automobile (10) est équipé d'une commande de direction (26) pour la direction automatique du véhicule (10) le long d'un premier chemin théorique et l'appareil (12) peut être déplacé en direction latérale par rapport au véhicule (10) par un actionneur (36) couplé à une commande de position de l'appareil (42) et peut être guidé le long d'un deuxième chemin théorique, **caractérisé en ce que** la commande de direction (26) est conçue pour diriger le véhicule (10) en fonction de la position respective de l'actionneur (36) et pour diriger le véhicule (10) vers la droite, dès que l'actionneur (36) a déplacé l'appareil (12) vers la droite de plus d'une fraction prédéterminée de sa plage de mouvement et pour diriger le véhicule (10) vers la gauche, dès que l'actionneur (36) a déplacé l'appareil (12) vers la gauche de plus d'une fraction prédéterminée de sa plage de mouvement.

2. Agencement selon la revendication 1, dans lequel le premier chemin théorique est identique au ou différent du deuxième chemin théorique.

3. Agencement selon une des revendications 1 ou 2, dans lequel la commande de direction (26) peut être amenée dans un deuxième mode, dans lequel elle dirige le véhicule (10) indépendamment de la position de l'actionneur (36).

4. Agencement selon l'une quelconque des revendications 1 à 3, dans lequel la commande de direction (26) peut être utilisée pour commander un actionneur de direction (22) du véhicule (10) à l'aide des signaux d'un système de détermination de position (38) destiné à déterminer la position du véhicule (10) et une information de chemin théorique pour le premier chemin théorique à parcourir par le véhicule.

5. Agencement selon l'une quelconque des revendications 1 à 4, dans lequel la commande de position de l'appareil (42) peut être utilisée pour commander l'actionneur (36) à l'aide des signaux d'un système de détermination de position (40) destiné à déterminer la position de l'appareil (12) et une information de chemin théorique pour le deuxième chemin théorique à parcourir par l'appareil (12).

6. Agencement selon la revendication 4 ou 5, dans lequel la commande de position de l'appareil (42) peut être utilisée, dans le cas où l'actionneur (36) a dépassé la fraction prédéterminée de sa plage de mouvement, pour surmoduler dans la commande de direction (26) les signaux du dispositif de détermination de position (38) et l'information du premier chemin théorique.

7. Combinaison d'un véhicule automobile (10) avec un appareil (12) attelé au véhicule (10) et destiné aux travaux des champs avec un agencement selon l'une quelconque des revendications 1 à 6.

8. Procédé pour la direction automatique d'une combinaison d'un véhicule automobile (10) avec un appareil (12) attelé au véhicule (10) et destiné aux travaux des champs, dans lequel le véhicule automobile (10) est dirigé automatiquement par une commande de direction (26) le long d'un premier chemin théorique et l'appareil (12) est guidé en direction latérale par rapport au véhicule (10) le long d'un deuxième chemin théorique par une commande de position de l'appareil (42) au moyen d'un actionneur (36), **caractérisé en ce que** la commande de direction (26) dirige le véhicule (10) en fonction de la position respective de l'actionneur (36) et dirige le véhicule (10) vers la droite, dès que l'actionneur (36) a déplacé l'appareil (12) vers la droite de plus d'une fraction prédéterminée de sa plage de mouvement et dirige le véhicule (10) vers la gauche, dès que l'actionneur (36) a déplacé l'appareil (12) vers la gauche de plus d'une fraction prédéterminée de sa plage de mouvement.
